Europäisches Patentamt

European Patent Office

Office européen des brevets

(11) Publication number: **0 245 106**
A2

# EUROPEAN PATENT APPLICATION

(21) Application number: 87304104.0

(22) Date of filing: 08.05.87

(51) Int. Cl.⁴: **F 16 F 7/06**, F 16 L 3/20

(30) Priority: 09.05.86 US 861506
20.06.86 US 877024

(43) Date of publication of application: 11.11.87
Bulletin 87/46

(84) Designated Contracting States: DE FR GB IT

(71) Applicant: **Pacific Scientific Company, 1350 South State College Boulevard, Anaheim California 92803 (US)**

(72) Inventor: **Yang, Elmer Chensheng, 2717 E. Grove Avenue, Orange California 92667 (US)**

(74) Representative: **Rushton, Ronald et al, SOMMERVILLE & RUSHTON 11 Holywell Hill, St. Albans Hertfordshire AL1 1EZ (GB)**

(54) **Motion snubber.**

(57) An elongated load nut is rotated by strut members that thread into and out of the nut. A control mechanism positioned within the nut is likewise rotated by way of shafts that thread into the strut members. A capstan spring brake is rotated by the load nut through the use of actuator rings which cooperate with lugs on the ends of the load nut. An inertia mass within the control mechanism produces a rotational load at a predetermined threshold through an acceleration responsive clutch. This load is transmitted through gearing to the capstan springs, causing them to unwind against a brake surface and produce a snubbing action on movement of the strut members. Once braking is initiated, the movement of the inertia mass and hence the struts is controlled by a velocity sensitive mechanism.

0245106

## MOTION SNUBBER

### Field of the Invention

This invention relates to mechanical shock arrestors and more particularly to an improved apparatus and method for snubbing or restricting motion while yet permitting motion in a controlled manner.

### Background of the Invention

The need for controlling motion arises in many situations, but is particularly necessary in controlling motion within power generating stations to protect expensive equipment and facilities, and to prevent safety hazards. In nuclear power generating stations, there is a requirement in some geographical areas that motion arresters be provided to prevent the rupture of pipes or the damage to other structure during a seismic disturbance. For example, a motion arrester in the form of a telescoping strut may extend between a pipe and adjacent wall, not to support the pipe, but merely to prevent excessive motion. At the same time, in many situations, it is necessary that the components be allowed to move to accommodate thermal expansion and contraction. Thus, motion arresters have been developed that permit unrestricted thermal movement, and merely prevent sudden movement that could damage the components.

Hydraulic devices have been utilized for this purpose. In addition, all mechanical snubbers have been developed in that they offer a significant advantage over the hydraulic snubber, the main one being they do not have the leakage problems of the hydraulic snubber and are not affected by radiation. A widely used, all mechanical snubber set forth in U.S. Patent No. 3,876,040 permits unrestricted movement below a predetermined acceleration threshold, but prevents the acceleration from exceeding that threshold. This means that velocity can continue to increase. The snubber in the above-referenced patent utilizes a clutch arrangement to prevent damage to the components of the snubber in the unlikely event the velocity at the end of the strokes of the unit could damage the unit. However, it is desirable that velocity be limited throughout the snubber travel.

In U.S. Patent No. 4,431,093, a snubber is disclosed which permits unrestricted motion below a predetermined velocity threshold, and permits continued controlled movement at that threshold. Such an arrangement has certain advantages in that a high acceleration for a short interval may not produce high velocity but can be damaging.

Large hydraulic snubbers typically allow the load on a strut to be slowly dissipated by "bleeding" hydraulic fluid through a small orifice. In some situations, the equivalent capabilities are desirable in an all mechanical strut. Thus, the present invention relates to an improved mechanical motion arrester, particularly one which is capable of accommodating substantial loads.

## Summary of the Invention

In accordance with the invention, there is provided a mechanical snubber having a pair of members to be connected to two objects to control relative motion between the objects. In a preferred form of the invention, these members are mounted for reciprocating motion relative to each other to form a strut. They are threadably connected to a load nut that converts the reciprocating motion into rotation of the nut. The rotating motion is transmitted through capstan spring means to a control mechanism. Another input to the control mechanism is also threadably connected to the strut members to impart rotation to the control mechanism. So long as the motion applied to the control mechanism is below a predetermined acceleration threshold, the control mechanism moves in synchronism and there is no snubbing action. However, the control mechanism includes acceleration sensitive means that will impart rotation to an inertia mass. The inertia of the mass will introduce a lagging action that at a certain acceleration causes the control mechanism to transmit a load to a brake means to provide braking or snubbing action on the movement of the strut members.

The means for transmitting motion to the inertia member includes a velocity sensitive mechanism such that the brake arrangement bleeds the load applied to the strut at a predetermined velocity. In other words, the braking mechanism is initiated at a predetermined acceleration, but once braking is applied, it is controlled in a manner to prevent the velocity from exceeding a predetermined level.

Correspondingly, the method of the invention involves sensing the acceleration of a pair of relatively moving members and initiating braking action on said members at a predetermined acceleration threshold. Once braking is initiated, velocity beyond a predetermined level is prevented.

In a preferred form of the invention, an acceleration sensitive element activates a clutch to drive an inertia member through an escapement mechanism wherein a star wheel is oscillated through a linkage arrangement to drive the inertia. _member._ Gearing in the control mechanism accommodates the difference in rotational speed of the load nut and that of the control mechanism, but the inertia mass introduces a load to the gearing mechanism that is transmitted to the brake. Preferably, the brake is in the form of capstan spring means that in response to the load from the inertia mass will engage a brake surface.

## Drawings

Figure 1 is a longitudinal cross section of the snubber of the invention illustrating the outer components surrounding the inner control mechanism.

Figure 2 is an exploded perspective view illustrating the structure of the end caps and the connection to the inner control mechanism.

Figure 3 is a perspective view of the capstan actuator rings and the load nut which is driven by the end cap threaded members illustrated in Figure 2.

Figure 4 is a perspective view of the capstan spring carrier tube which surrounds the load nut.

Figure 5 is a perspective view of a pair of interleaved capstan springs which surround the capstan carrier tube of Figure 4.

Figure 6 is a perspective view of the load tube and mating keys which surround the capstan springs.

Figure 7 is a perspective view of a pair of outer tubes which surround the load tube and are interconnected to the end caps.

Figure 8 is a perspective view of the inner control mechanism.

Figure 9 is an exploded perspective view of the control mechanism.

Figure 10 is an exploded perspective view of the clutch of the control mechanism in Figure 9.

Figure 11 is a cross-sectional view of the control mechanism of Figure 8.

Figure 12 is a cross-sectional view of the snubber along lines 12-12 of Figure 1.

Figure 13 is a cross-sectional view on lines 13-13 of Figure 1.

Figure 14 is a graph schematically illustrating the operation of the snubber of the invention.

Detailed Description of the Preferred Embodiment

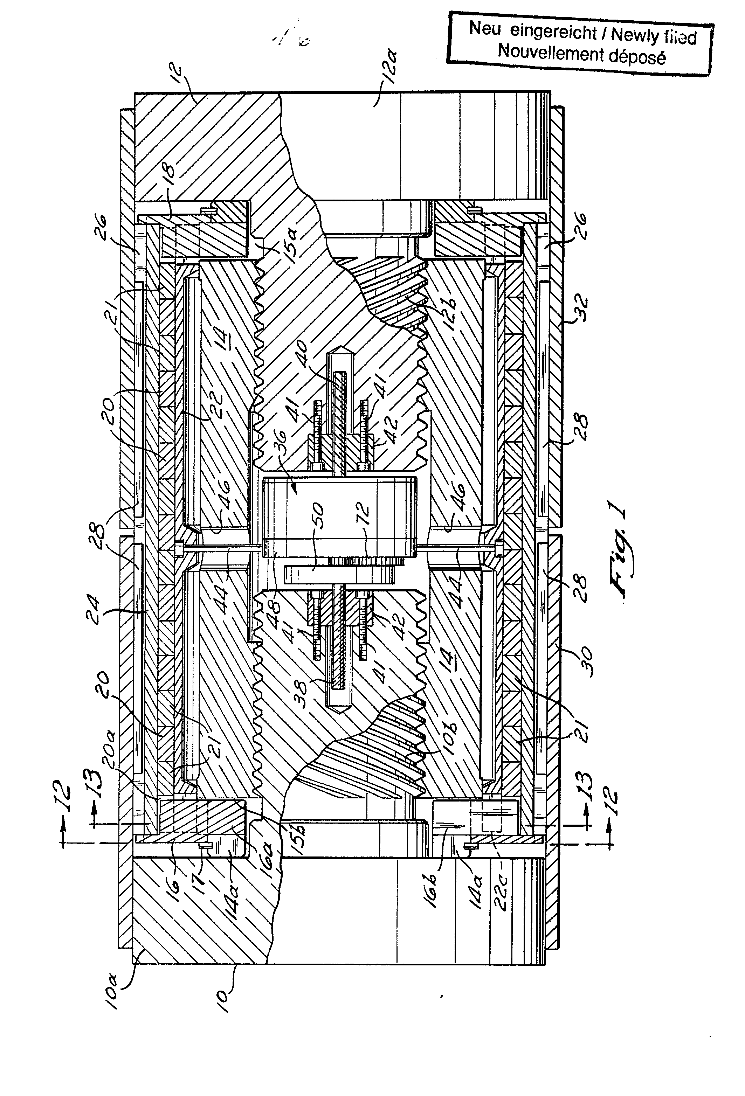

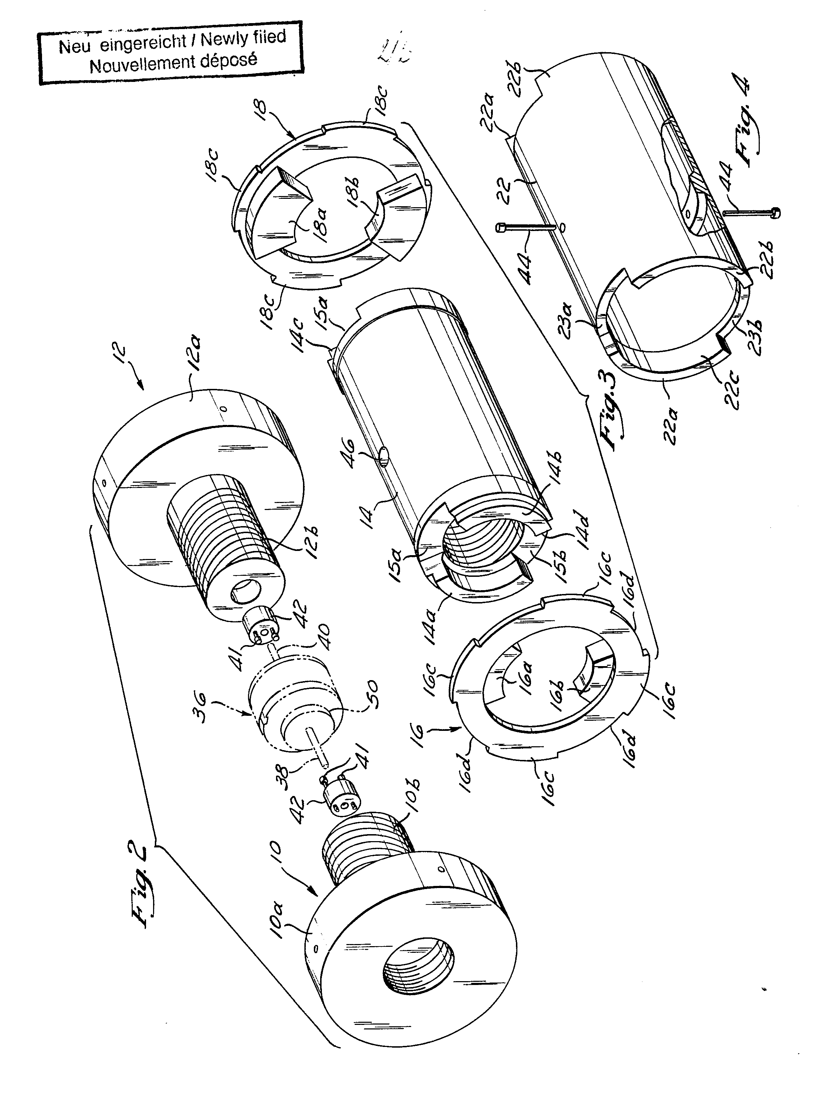

Referring first to Figures 1 and 2, there is shown a pair of strut members 10 and 12 each having axially outer end cap portions 10a and 12a, respectively, and each having large threaded portions 10b and 12b, respectively, extending axially towards each other. The threaded portion 10b has a left-handed thread while the threaded portion 12b has a right-handed thread.

The threaded portions 10b and 12b are shown threaded into the ends of a tubular load nut 14 which is threaded internally on each end to mate with the threaded strut 10b and 12b. The threads are of the high lead type so that reciprocating movement of the members 10 and 12 is converted to rotation of the nut 14. Movement of the strut members towards each other rotates the nut in one direction, and movement away from said other rotates the nut in the other direction.

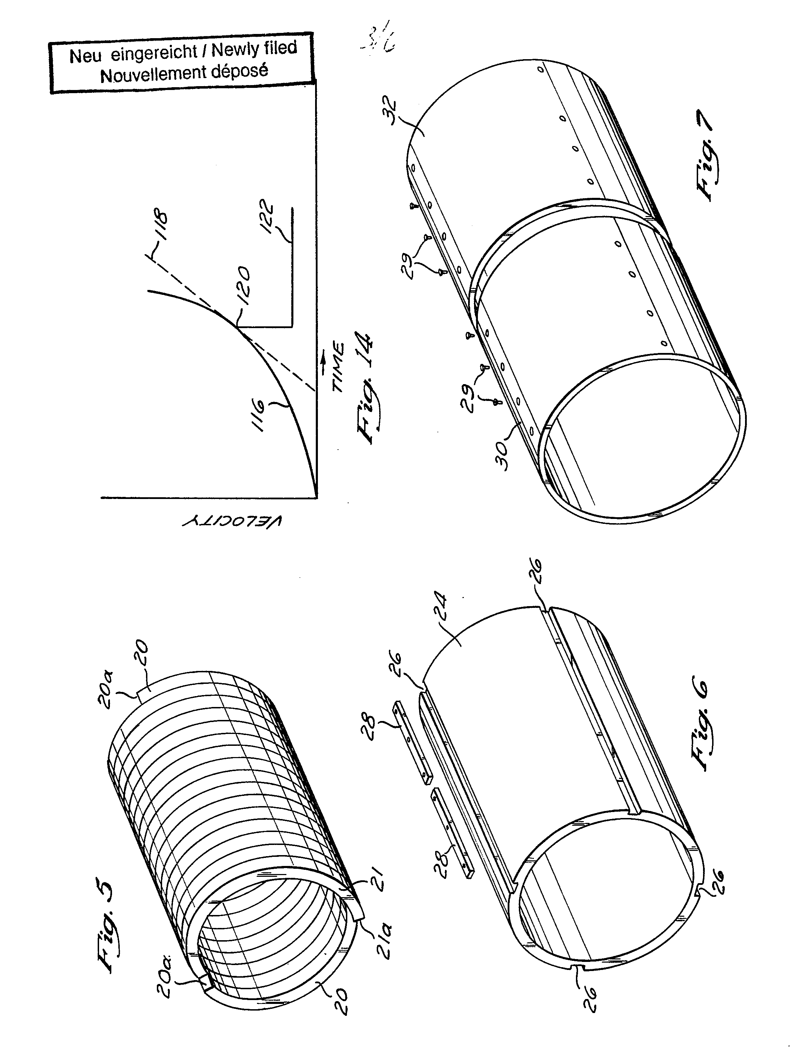

As may be seen from Figure 3, the load nut 14 has a pair of axially, and circumferentially extending lugs 14a and 14b on each end. These lugs are circumferentially spaced by or define a pair of circumferentially spaced slots 15a and 15b on each end. The axial ends 14c and 14d of the lugs 14a and 14b have an outer diameter which is smaller than the outer diameter of the portion of the lugs connected to the main body of the load nut. Thus, a shoulder is created between the end portion 14c and the main portion of the lug 14a, and a similar shoulder is created on lug 14b.

A capstan actuator ring 16 fits onto the end of the load nut 14. The ring includes a pair of axially extending lugs 16a and 16b which have radially inner portions which fit into the slots 15a and 15b between the lugs 14a and 14b. There is a small gap or clearance between the lugs of the actuator ring and the lugs of the load nut. The end portions 14c and 14d of the load nut lugs fit within the inner diameter of the actuator ring 16 such that the ring engages the adjacent shoulder. As seen in Figure 1, a retainer 17 holds the actuator ring on the load nut. The outer diameter of the actuator ring 16 is formed with four circumferentially spaced teeth 16c separated by four circumferentially extending gaps 16d. A capstan actuator ring 18 identical to ring 16 is similarly formed and mounted on the other end of the nut 14.

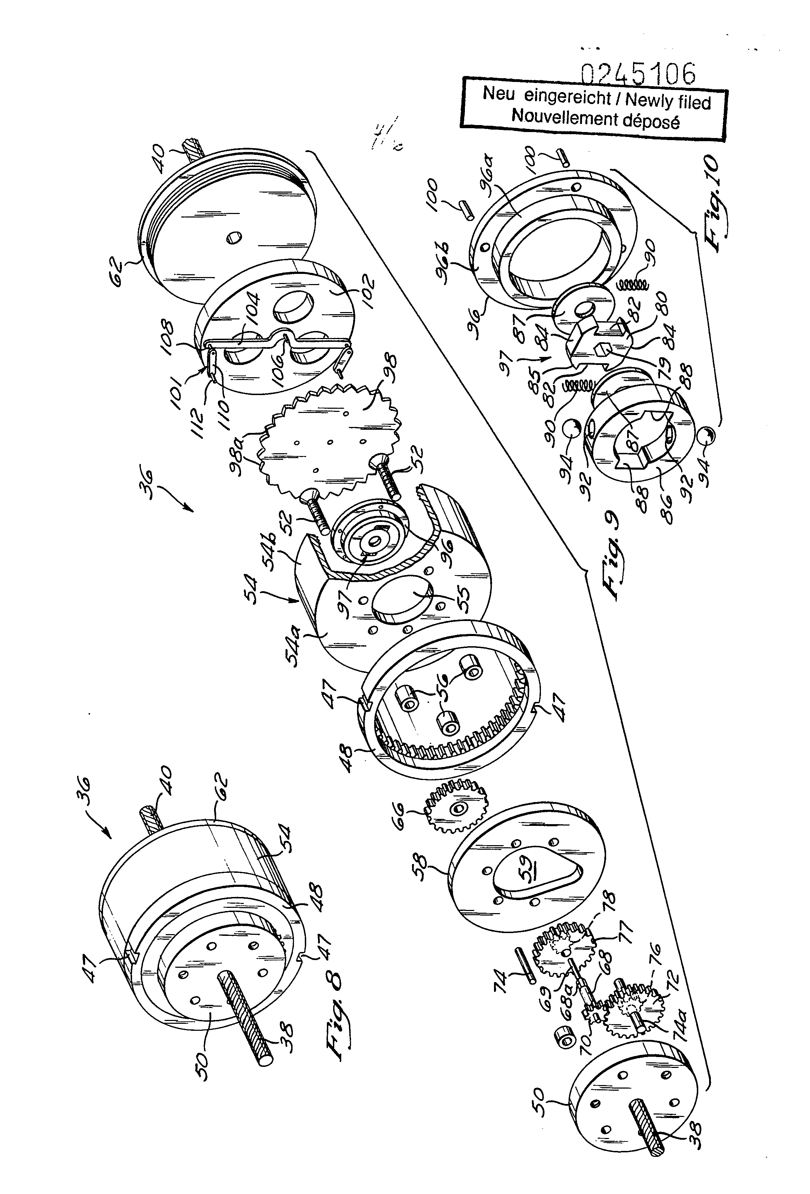

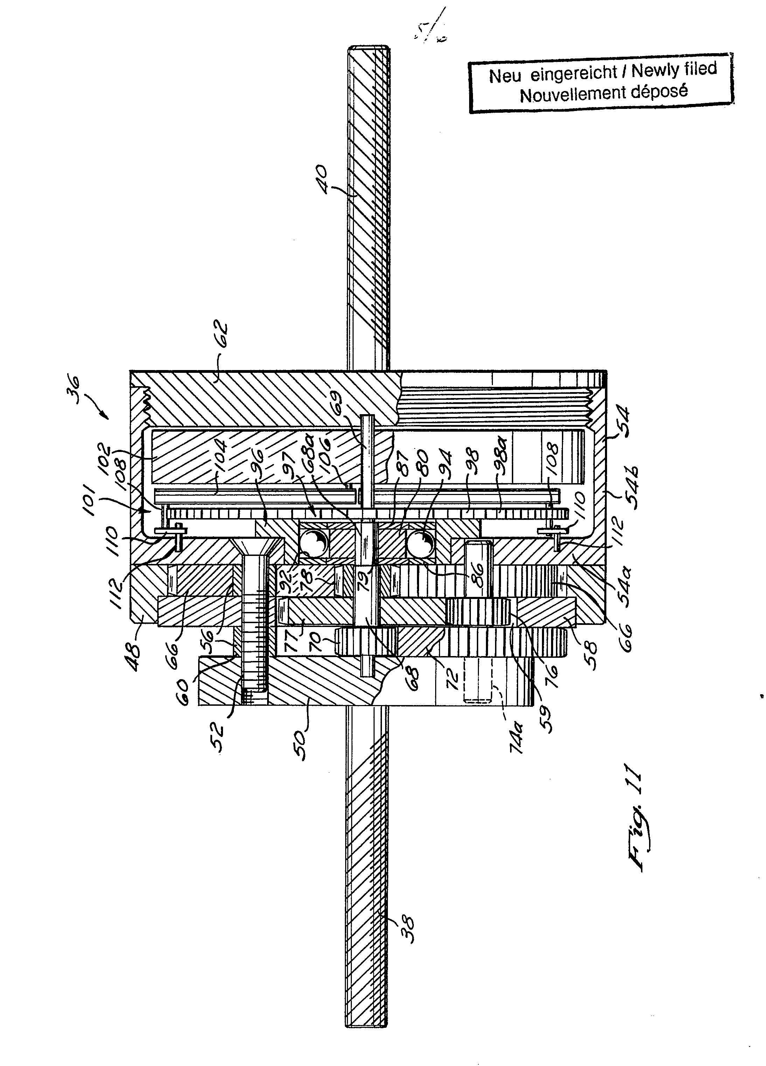

Capstan spring means, Figures 1 and 5, in the form of interleaved capstan springs 20 and 21 surround the load nut and a capstan carrier tube 22, Figures 1 and 4, extending between the springs and the load nut. The circumferential ends 20a and 21a of the springs cooperate with the radially outer portions of the actuator ring lugs 16a and 16b. That is, the ends 20a on each end of the spring 20 cooperate with one radial face of a lug 16a and a lug 18a on each end of the nut, and the spring ends 21a similarly cooperate with another face of a lug 16b and 18b on each end.

The capstan carrier tube 22 has on each end inwardly extending flanges 22c that form bearings for the tube on the load nut. Also, the tube is similar to the load nut 14, formed with a pair of axially and circumferentially extending lugs 22a and 22b separated by circumferentially extending slots 23a and 23b. Portions of the actuator ring lugs 16a and 16b extend into the slots 23a and 23b of the carrier tube; and similarly, the lugs 18a and 18b on the ring 18 at the other end of the carrier tube mate with the lugs on the other end of the carrier tube.

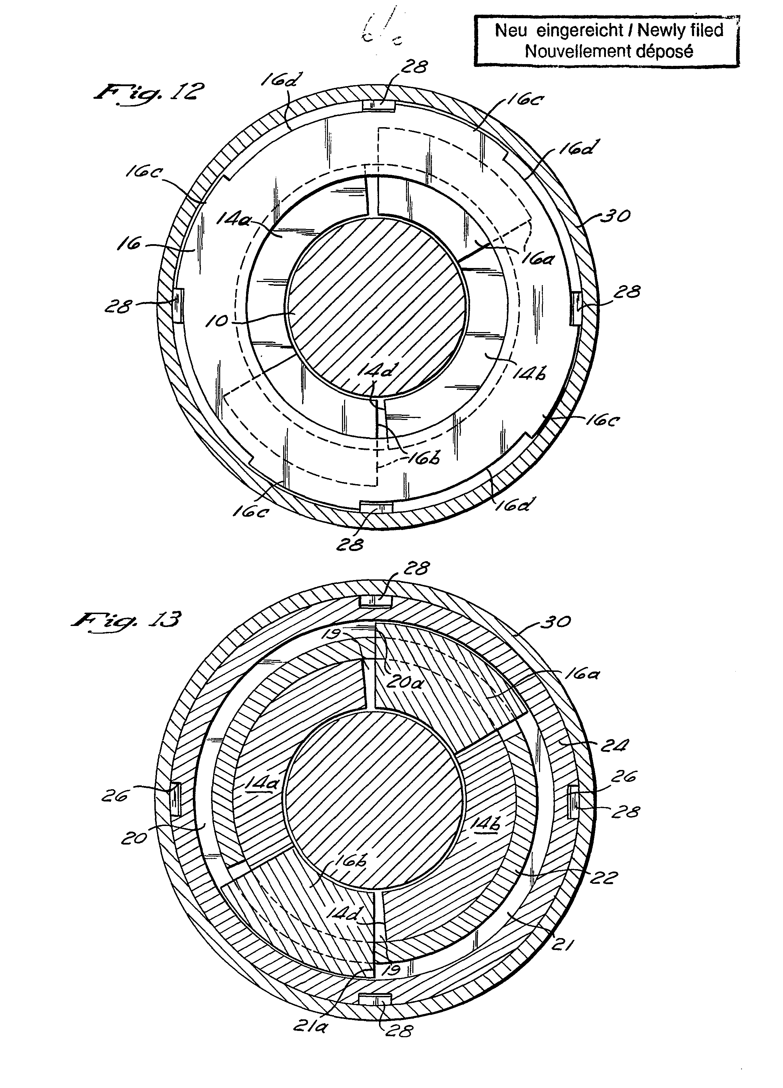

Surrounding the capstan springs 20 and 21 is a load tube 24 which may be seen in Figure 1 and Figure 6. This load tube has a plurality of circumferentially spaced and axially extending load key grooves 26 in its exterior surface. Load keys 28 attached by screws 29 or other suitable means to a pair of surrounding tubes 30 and 32 fit slidably in the slots. The tube 30, Figures 1 and 7, is fixed to end cap 10a and the tube 32 is fixed to end cap 12a. This arrangement permits the end caps and their attached outer tubes to move axially towards and away from each other while the load keys prevent rotation of the load tube 24 with respect to the outer tubes 30 and 32.

The teeth 16c and 18c on the actuator rings limit rotation of the nut when the strut members are extended.

Control Mechanism

Positioned within the load nut and between the inner ends of the strut member threaded portions 10b and 12b is a control mechanism 36 which controls the braking of the movement of the strut members by snubbing movement at a predetermined acceleration threshold. As may be seen from Figures 1 and 2, the control mechanism 36 includes a pair of threaded shafts 38 and 40 which mate with threads in nuts 42. These nuts fit within mating sockets on the axial inner ends of the threaded strut members 10b and 12b and are attached thereto by suitable fasteners 41 extending into the strut members. The threads on the shafts 38 and 40 and on the mating nuts 42 are of the high lead type so that axial movement of the strut members causes rotation of the threaded members. The orientation of the threads is such as to cause the control mechanism 36 to rotate in the opposite direction as the load nut 14.

The control mechanism is also connected to the surrounding structure by a pair of clock drive rods 44 which are mounted to the midsection of the capstan carrier tube 22 and extend radially inwardly from the tube, with the rods extending through enlarged holes 46 in the load nut. The radially inner ends of these rods cooperate with the control mechanism, and more specifically, extend into mating axially extending grooves 47 in the exterior of a ring gear 48 in the control mechanism.

Referring to Figures 11 and 13, as well as to Figures 1 and 2, it may be seen that the threaded shaft 38 is fixed to a disc 50, which in turn is secured to a shallow, cup-shaped housing 54 by three circumferentially spaced screws 52 that extend through a disc-shaped wall 54a of the housing. The screws 52 further extend through spacers 56, a gear spacer plate 58 and spacers 60. An end plate 62 is connected to the right-hand threaded member as viewed in Figures 1 and 11. The end plate 62 threads into a cylindrical side wall 54b of the housing 54. The end plate 50 is further connected and aligned to the housing by three pins 74.

A gear spacer plate 58 fits within a disc-shaped space in the ring gear 48, such that the ring gear can rotate around the spacer plate 58. The exterior of the spacers 56 form bearings for three planet or spur gears 66 which mesh with the teeth of the ring gear.

Coaxially positioned within the control mechanism with the threaded shafts 38 and 40 is a center shaft pinion 68, which has one end mounted for rotation in the end plate 50. The other end of the shaft pinion 68 is positioned within a cam 80, which is ultimately supported in the end wall 54a of the housing 54, as will be further described below. That end of the shaft pinion 68 further includes an internal socket (not shown) which opens to its outer end and which has positioned therein one end of a spindle 69, which is coaxial with the shaft pinion 68. The other end of the spindle 69 is mounted in the end plate 62, as may be seen in Figure 13. This arrangement enables the shaft pinion 68 to rotate independently of the spindle 69. The pinion 68 and the spindle 69 could be made as a single unit, but that is less desirable.

A pinion gear 70 fixed to the shaft 68 adjacent the end plate 50 meshes with a spur gear 72 rotatably mounted on a pin 74a which is journalled in the end plate 50 and in the disc-shaped portion 54a of the housing 54. Also fixed to the gear 72 is a pinion gear 76 which is located in the irregularly shaped opening 59 in the gear spacer plate 58. This pinion gear mates with a spur gear 77 rotatably mounted on the center shaft pinion 68. Also mounted of the shaft 68 and fixed to the spur gear 77 in sun gear 78, which meshes with the surrounding planet gears 66.

The end 68a of the center shaft pinion 68 has a hexagonal cross section, or other straight sided arrangement to mate with a correspondingly shaped opening 79 in the cam 80, as seen in Figure 10. Thus, the shaft pinion 68 and the cam 80 rotate as a unit. The cam 80 has a generally circular outer diameter, which is interrupted by a pair of diametrically spaced recesses 82. Also formed on the outer diameter of the cam 80 is a pair of diametrically spaced, chord-like flats 84 that are oriented 90° from the recesses 82. This leaves four segments 85 with a circular exterior positioned between the recesses 82 and the flats 84.

Surrounding the cam 80 is a ring-shaped cam bushing 86 having a circular inner diameter which engages the curved segments 85 on the cam. Formed on the inner diameter of the cam bushing 86 is a pair of diametrically spaced recesses 88 which are sized and aligned with the recesses 82 in the cam 80 to form rectangular pockets for receiving a pair of coil springs 90. The ends of each of the coil springs 90 engage the ends of one of the pockets in the cam 80 and the cam bushing 86, such that the springs rotate the cam bushing when the cam is rotated. A pair of washers 87 engage the ends of the cam 80 and fit within the opening in the cam bushing 86 to hold the springs 90 in the pockets 82/88.

Also formed in the cam bushing 86 is a pair of radially extending, diametrically spaced holes 92. A lock ball 94 is positioned in each of the holes 92.

The cam bushing 86 is rotatably supported in a surrounding cam race 96. The ring-shaped portion 96a of the cam race is further rotatably supported within the central opening 55 in the housing end wall 54a. The components shown in Figure 10 effectively form an acceleration sensitive clutch 97.

The cam race further includes a radially extending flange 96b which is pinned to a star wheel 98 by a

0245106

plurality of rivets or pins 100. The star wheel which is rotatably supported on the spindle 69 has a plurality of peripheral teeth 98a.

Also mounted on the spindle 68b is a disc-shaped inertia mass 102. The inertia mass is oscillated by movement of the star wheel, utilizing an escapement-like linkage system 101. This includes a pair of aligned elongated cranks 104 each having a curved central portion received on an eccentrically positioned pivot pin or dowel 106 pressed into the mass 102. The cranks 104 extend almost diametrically across the inertia mass. The ends of each crank 104 is connected by a drive pin 108 to one end of a connecting link 110. A single thick crank can be employed, but a pair of spaced, thin cranks provides sufficient stiffness. The opposite ends of each of the connecting links 110 is connected to the pin 112, which is supported in the housing disc wall 54a. The drive pins 108 cooperate with the teeth 98a of the star wheel 98. That is, rotation of the star wheel causes the drive pins 108 to slide along the teeth 98a thus moving the crank 104 and moving the inertia mass 102 about its pivot spindle 68b. The pin 106 is mounted on one side of the spindle 69. The pins 108 are located so that when one pin 108 is in between two teeth 98a on the star wheel 98, the other pin 108 is at the crest of a tooth 98a. This arrangement will cause the cranks 104 to move alternately up and down as viewed in Figure 11, producing an oscillating or back and forth motion on the inertia mass 102.

Operation

In operation, the strut members 10 and 12 are connected between the objects for which relative motion is to be controlled or snubbed. For example, the strut member 10 may be connected to a pipe or other component within a nuclear power generating station, while the other strut member 12 is connected to wall or other support structure. The strut is shown in Figure 1 in almost its fully telescoped position. Moving the strut members away from each other, in effect, extending the strut, will rotate the load nut 14 by virtue of the high lead threaded connection between the threaded portions 10b and 12b and the interior threads on the load nut 14. Simultaneously, the threaded shafts 38 and 40 of the control mechanism 36 are rotated by the cooperation between its high lead threads and the mating threads on the nuts 42 secured to the strut members.

Extending the strut members will rotate the load nut in one direction, while moving them towards each other will rotate the load nut in the opposite direction. Rotating the load nut in one direction will cause its lugs 14a and 14b to engage the lugs 16a and 16b on the capstan actuator ring 16. Rotating the load nut in the opposite direction will cause the lugs 14a and 14b on the other end of the load nut to engage the lugs 18a and 18b on the capstan actuator ring 18. The load nut lugs do not drive both capstan actuator rings directly because of a slight clearance or gap 19 that exists between the lugs of the actuator rings and the lugs of the load nuts, whereas the capstan spring ends on the other end are driving the ring at that end.

More specifically, assuming the rotation of the nut 14 is in the counter-clockwise direction, as viewed in Figure 12, the faces of the lugs 14a and 14b facing in the counter-clockwise direction engage the trailing faces of the lugs 16a and 16b, to rotate the capstan actuator ring 16 in the counter-clockwise direction. The radially outer portions of the lugs 16a and 16b engage the ends 20 and 21a of the capstan springs to rotate the springs. The springs are only loosely surrounding the capstan carrier tube 22, and thus rotation of the spring does not directly produce rotation of the carrier tube. Also, the outer diameter of the springs are initially spaced from the surrounding brake or load tube 24, such that there is no resistance to rotation of the springs from that member. The ends of the springs on the opposite end of the load tube are engaging the faces of lugs 18a and 18b of the capstan actuator ring 18 on the opposite face from the lugs 16a and 16b. Consequently, rotation of the capstan springs by the actuator ring 16 immediately rotates the actuator ring 18. The load on the springs is in a spring unwinding direction. However, at low accelerations, the load on the springs is very low such that there is not sufficient unwinding action to produce any braking action against the surrounding load tube 24.

Rotation of the capstan actuator ring 18 by the capstan springs also rotates the capstan carrier tube 22 by virtue of the lugs 18a and 18b engaging the lugs 22a and 22b on the carrier tube. Rotation of the carrier tube 22, of course, rotates the clock driving rods 44 which are fixed to the tube 22. The inner ends of the drive rods extending into the grooves 47 provide a driving force to the ring gear 48.

As indicated above, the movement of the strut members also rotates the threaded shafts 38 and 40 of the control mechanism 36. This imparts rotation to the end plates 50 and 62 and the components secured to these end plates, including the housing 54, the gear spacer plate 58, the three screws 52 extending through the end plate 50, and the housing wall 54a and into the end plate 50. This also means that the spur gears 66 mounted on the screws either move in rotation with the surrounding ring gear 48 or the spur gears 66 "walk" around the interior teeth of the ring gear 48. Rotation of the end plate 50 and housing wall 54a will also move the pin 74 in a circle together with the gear 72 and 75 mounted thereon. These gears will "walk" around the pinion gear 70 or will rotate that gear together with the shaft pinion 68 fixed to the pinion gear. Likewise, the gears will "walk" around the spur gear 76 or will rotate it together with the sun gear 78 which is fixed to the gear 76. The sun gear 78 in turn will rotate as the surrounding planet gears 66 rotate.

The shaft pinion 68 will drive the cam 80 and it in turn will drive the cam bushing 86 by means of the two coil springs 90. A spindle 69 bearing the weight of the inertia mass may or may not rotate, but if it does, it should not cause the inertia mass 102 to rotate. The cam race 96 surrounding the cam bushing 86 does not rotate because it is fixed to the inertia mass 102 by way of the escapement mechanism such that the inertia of inertia mass resists rotation. Because the clutch formed by the cam 80 and cam race 96 is thus disengaged and because the rotating gear arrangement does not introduce much load on the ring gear, there is no appreciable load applied to the rods 44 and the carrier tube 22 and capstan actuator ring 18. Consequently, the capstan springs do not unwind and the various components in effect rotate in synchronism providing very little resistance to movement of the strut. The control mechanism shafts rotate at a rate much higher than the load nut, but the gearing system accommodates this differential so that there is little load on the ring gear such that it will move with the load nut, and the gearing is in effect free wheeling.

However, if the extending or contracting movement of the strut occurs at an acceleration that reaches a predetermined threshold level, the inertia of the small cam bushing 86 will cause the light coil springs 90 driving it to be compressed slightly so that the cam 80 advances with respect to the surrounding cam race 96. This action causes the flats 84 on the cam to push the lock balls 94 into engagement with the surrounding annular surface of the cam race portion 96a, thus obtaining a clutch engagement action. With this engagement, the cam race 96 will rotate and in turn cause the star wheel 98 to rotate. Rotating it will cause actuation of the

0245106

escapement or linkage mechanism connected to the inertia mass 102. That is, as the star wheel 98 rotates, the drive pins 108 engaging the opposite edges of the star wheel alternately move up and down the teeth 98a of the wheel. This produces back and forth movement of the cranks 104, which will cause the inertia mass 102 to oscillate. The nature of this movement will cause the oscillation to be at a relatively slow rate.

The inertia of the inertia mass is felt by the clutch and back through the shaft pinion 68 and then through the gear train to the ring gear. The input shafts continue to rotate at their same speed as determined by the strut members axial movement. The load from the inertia mass 102 is transmitted to the ring gear 48 causing it to rotate backward and move out of synchronization with the rods 44. This in turn introduces a drag to the capstan carrier tube 22 back to the capstan actuator ring 18, which is felt by the capstan springs as an increased load. This increased load causes the capstan springs to unwind slightly such that the exterior of the capstan spring coils engage the surrounding load tube 24 and produce a braking action.

The load tube is, of course, keyed to the outer tubes 26 which are in turn fixed to the end caps 10a and 12a so as not to rotate. This braking action will continue so long as the clutch in the control mechanism remains engaged. If it is a sustained load urging the strut to move in one direction, the load is slowly dissipated or "bled". The rate of dissipating the load is thus controlled by the oscillation of the inertia mass 102. This is basically a function of velocity, and the velocity at which the inertia mass can oscillate is limited by the geometry of the components.

If the movement on the strut is reversed from that initially considered, the device functions the same except that the rotation of the load nut is reversed and the

0245106

rotation of the components in the control mechanism is reversed. Further, it should be understood that if the load applied to the strut is an oscillating load such as the type encountered during a seismic disturbance, the question of dissipating the load on the strut is not encountered in that the oscillating input accomplishes this dissipation. The sustained load in one direction is encountered in situations wherein thermal build-ups may urge a component to move a few inches in one direction. A strut which is solely acceleration sensitive, theoretically can permit movement to a significant velocity during that travel. However, the strut of the present invention limits the velocity once the braking is initiated.

Figure 14 graphically illustrates an approximation of the operation of one form of the invention. The curved line 116 represents the acceleration of relative movement of the main strut members 10 and 12; which in turn is proportional to the movement of the shaft 68 and cam 80. The dashed line 118 represents the threshold acceleration at which braking or snubbing action commences and which is not to be exceeded. When the strut acceleration reaches the threshold at point 120, the braking applied reduces the velocity to a predetermined constant level represented by the line 122. The force urging the relative strut movement is then dissipated or bled by the braking action at a rate which does not exceed that velocity indicated by the line 122.

0245106

WHAT IS CLAIMED IS:

1.  A motion snubbing mechanism comprising:

a pair of members mounted for movement relative to each other and adapted to be connected to objects whose motion is to be controlled;

means for braking the relative movement of said members;

acceleration sensitive means for initiating braking action by said braking means at a predetermined acceleration threshold; and

velocity sensitive means actuated by said acceleration sensitive means to control the braking action and thus limit movement of said members once said threshold has been reached.

2.  The mechanism of Claim 1 including:

a load nut threadably connected to said members for converting axial reciprocation of said members into rotation of said load nut, said hut having lugs on its ends;

a pair of actuator rings mounted on opposite ends of said load nut, said rings having lugs which intermesh with said load nut lugs;

a capstan carrier tube surrounding and rotatably supported on said load nut and having lugs on its ends which intermesh with said actuator ring lugs;

capstan spring means surrounding said carrier tube and having spring ends which transmit torque between the lugs on said actuator rings in a manner such that rotation of said load nut in one direction rotates one actuator ring, which in turn rotates the capstan spring means, which in turn rotates the other actuator ring means, the lugs on the carrier ring driven by said capstan spring means also rotating said carrier tube;

a cylindrical brake surface surrounding said capstan spring means to be engaged by said capstan springs and provide braking action when unwinding forces applied to the capstan spring means cause the spring means to increase its diameter and engage the brake surface, such unwinding force being produced by applying a rotational drag or load to the carrier tube; and

a control mechanism positioned within said load nut to provide said load, said control mechanism including said acceleration sensitive means and said velocity sensitivity means.

3. The mechanism of Claim 1, wherein said control mechanism includes a clutch which incorporates said acceleration sensitive means that causes the clutch to be not engaged below said threshold and engaged at said threshold, said clutch when engaged connecting said velocity sensitive means so as to control said braking action.

4. The mechanism of Claim 3, wherein said acceleration sensitive means includes a cam and a cam bushing surrounding said cam and connected to the cam by springs in a manner such that the cam bushing is rotated by said cam through said springs, a cam race surrounding said bushing being connected to said velocity sensitive means, clutch elements carried by said bushing but moveable by said cam into engagement with said race when the inertia of said bushing causes it to lag the rotation of said cam.

5. The mechanism of Claim 4, wherein said velocity sensitive means includes an inertia mass and a clock-like escapement means connected to said clutch for moving said inertia mass, the connection being such that the inertia mass introduces a lagging load to said clutch to control the braking applied to said members.

6. The mechanism of Claim 1, wherein said velocity sensitive means includes a rotatably mounted inertia mass, and an escapement connected to oscillate the inertia mass.

0245106

7. The mechanism of Claim 1, including a load nut threadably connected to said members for converting axial reciprocation of said members into rotation of said load nut;

a pair of actuator rings mounted on opposite ends of said load nut having lugs which intermesh with lugs on said load nut;

a capstan carrier tube surrounding said load nut and having lugs on its ends which intermesh with said actuator ring loads;

means connecting said carrier tube to said acceleration sensitive means; and

wherein said brake means includes capstan spring means surrounding said carrier tube with the ends of said capstan spring means cooperating with the lugs on said actuator rings, and a brake surface surrounding said capstan spring means to be engaged by said capstan spring means to provide said braking action when unwinding forces applied to the capstan spring means cause the capstan spring means to increase its diameter and engage the brake surface, such unwinding force being produced by said acceleration and velocity sensitive means applying a rotational drag to the carrier tube.

8. The mechanism of Claim 1, including a load nut threadably connected to said members for converting axial reciprocation of said members through rotation of said load nut; and

a pair of actuator rings mounted on opposite ends of said load nut having lugs which intermesh with lugs on said load nut;

wherein said braking means includes capstan spring means having ends which cooperate with the lugs on said actuator rings and means for connecting said actuator rings to said acceleration sensitive means and said velocity sensitive means wherein it is driven through said capstan spring means.

9. The mechanism of Claim 8, wherein said velocity sensitive means includes a rotatably mounted inertia mass and an escapement mechanism connected to oscillate said inertia mass whereby the oscillation of said inertia mass is transmitted to capstan spring means.

10. A motion snubbing mechanism comprising:

a pair of strut members mounted for reciprocating movement relative to each other and adapted to be connected to objects whose motion is to be controlled;

means for braking the relative movement of said members;

a control mechanism including a rotationally mounted inertia mass, an escapement mechanism for oscillating the inertia mass, and a clutch having an input shaft rotated in synchronism with movement of said strut members, said clutch being connected to said escapement mechanism to drive the inertia mass at a predetermined motion threshold.

11. The mechanism of Claim 10, including capstan spring means connected to said strut members to transmit rotation to said clutch, said capstan springs forming a portion of said brake means to provide braking action in response to the load introduced by said inertia mass.

12. The mechanism of Claim 10, wherein said clutch includes a rotatably mounted cam element, a cam bushing surrounding said cam element, resilient means drivingly interconnecting the cam element and the cam bushing, a cam race surrounding said bushing, and a pair of lock balls carried by said bushing and said cam element, said cam bushing being rotatable separate from said cam race below a predetermined acceleration, but being interconnected to said cam race by said lock balls when the rotation of said cam bushing lags the rotation of said cam element, the cam element including a surface which cams the lock balls into engagement with the cam race at said acceleration.

13. The mechanism of Claim 10, including a load nut threadably connected to said strut members in a manner such that reciprocation of said strut members relative to each other rotates said load nut, said control mechanism is positioned within said load nut and includes outwardly extending shafts which are threadably connected to the strut members in a manner that said reciprocation rotates the control mechanism shafts in synchronism with said load nut.

14. A motion snubbing mechanism comprising:

a pair of strut members mounted for reciprocation relative to each other and adapted to be connected to objects whose motion is to be controlled;

a load nut connected to said strut members and including means for converting said reciprocation into rotation of said load nut;

a control mechanism including means for connecting the control mechanism to said strut members in a manner such that said reciprocation is converted into rotation of said control mechanism in synchronism with the rotation of said load nut;

means interconnecting said control mechanism and said load nut to introduce a rotational load on said load nut when said control mechanism is rotating out of synchronism with said load nut, and said control mechanism includes means responsive to predetermined motion threshold for introducing said load at said predetermined threshold; and

brake means responsive to said load to brake the rotation of said load nut at said threshold until the control mechanism and the load nut once more rotate in synchronism.

15. The snubbing mechanism of Claim 14, wherein said control mechanism includes a pair of threaded shafts, each threadably connected to one of said strut members in a manner such that reciprocation of said members rotates said shafts in synchronism with said members;

support structure connected to said threaded shafts to rotate with the shafts;

a gearing system supported by said structure including a ring gear which is interconnected to said load nut, and a pinion gear driving a shaft within said control mechanism, an inertia mass rotatably mounted within said support structure, and a clutch including an input member rotated by said pinion shaft, and an output member connected to rotate said inertia mass.

16. The snubber mechanism of Claim 15, wherein said gearing system includes three spaced shafts, three planet gears mounted on said shafts, said ring gear including a ring-shaped member having threads formed on its interior diameter meshing with said planet gears, a sun gear rotatably mounted on said pinion shaft and meshing with and positioned between said three planet gears, a spur gear axially positioned between said pinion gear and said sun gear and rotatably mounted on said pinion shaft, a gear rotational pin extending parallel to said three spaced shafts, a gear mounted on said pin and meshing with said pinion gear, a second pinion gear mounted on said pin and meshing with the spur gear mounted on said pinion shaft, and means interconnecting said load tube and the exterior of said spur ring gear for transmitting the rotational position of said ring gear to said load nut, said gear system allowing said ring gear to move in synchronism with the load nut below said threshold.

17. The snubbing mechanism of Claim 15, wherein said clutch includes a cam mounted to rotate with said pinion shaft, a cam bushing surrounding said cam, resilient means connecting the cam and the cam bushing in a manner such that rotation of the cam will rotate the bushing, lock balls carried by said cam bushing and engaging a cam surface on the exterior of said cam, said cam bushing and said cam race having a clutch unengaged position wherein the cam bushing can rotate within the cam race but does not drive the cam race, and an engaged position wherein at said threshold the resilient connection between the cam bushing and the cam race will allow the inertia of said cam bushing to cause the cam bushing to lag the rotation of said cam, which action causes said cam surface to cam the lock balls into engagement with said cam race so that the cam and cam bushing and cam race all rotate together.

18. The motion snubbing mechanism of Claim 17, including a disc-like star wheel having a plurality of teeth on its outer periphery is rotatably mounted on the same axis as said inertia mass and is connected to rotate with said cam race;

an escapement linkage including a crank having a central portion connected to move with an eccentrically mounted pin anchored to said inertia mass adjacent to the rotational axis of the inertia mass, and the ends of said crank extend outwardly towards the periphery of the inertia mass, said linkage further including drive pins extending axially from the outer ends of said crank pins and being in driving engagement with the teeth of said star wheel in a manner such that rotation of said star wheel reciprocates said crank causing oscillating movement of the inertia mass.

19. A motion snubbing mechanism comprising:

a pair of strut members mounted for movement relative to each other and adapted to be connected to objects whose motion is to be controlled, said strut members including disc-shaped end caps and shaft threaded shaft portions connected to each of said end caps;

a tubular load nut having internal threads on each end, one of said threaded portions being threaded into each end of said load nut, the threads on said strut member threaded portions and on said load nut being constructed such that movement of said strut members towards each other will rotate said load nut in one direction and movement of said strut members away from each other will rotate said load nut in the opposite direction;

an outer tube attached to each of said end caps with the outer tubes extending towards each other, concentrically positioned with respect to said load nut and spaced outwardly from the load nut to define an annular space between the load nut and the outer tubes;

brake means positioned in said annular space for snubbing rotation of said load nut and thereby reciprocation of said strut member;

a control mechanism positioned within said load nut between the ends of said strut member threaded portions, said control mechanism including a pair of threaded shafts that extend axially to mate with threads carried on said threaded portion in a manner such that axial reciprocation of said strut members will cause said control mechanism to rotate in synchronism with the rotation of said load nut, means within said control mechanism for causing the control mechanism to lag the rotation of said load nut and thereby making the control mechanism rotation out of synchronism with the load nut rotation; and

means interconnecting said load nut to said control mechanism for sensing the movement of said control mechanism out of synchronism with the load nut, and means for utilizing said sensed information to initiate braking action for snubbing movement of the load nut and hence said strut members.

20. The snubber mechanism of Claim 19, wherein said interconnecting means includes:

a pair of actuator rings mounted on opposite ends of said load nut within said annular space, said actuator ring including axially extending lugs which cooperate with axially extending lugs formed on the ends of said load nut;

a capstan carrier tube surrounding said load nut and being rotatably mounted thereon, said carrier tube having axially extending lugs on each end which cooperate with the lugs on said actuator rings; and

capstan spring means loosely surrounding the carrier tube with the ends of said spring means engaging lugs on said actuator rings in a manner such that rotation of one actuator ring caused by rotation of said load nut will rotate said capstan spring means and transmit the rotating force to the other actuator ring;

a load tube surrounding said actuator spring means;

means interconnecting said load tube to said outer tubes in a manner to permit axial movement of said outer tubes relative to said load tube and said outer tubes prevent rotation of the load tube;

a pair of rods fixed to said carrier tube and extending inwardly through holes in said load tube and into a mating recess on the exterior of said control mechanism.

21. The snubber mechanism of Claim 20, wherein:

said actuator ring lugs are arcuate segments which fit between the lugs formed on said load nut and on said carrier tube, the radially inner portion of said actuator ring lugs cooperating with the lugs on said load nut, and the lugs on said carrier tube engaging portions of said actuator ring lugs surrounding said load tube lugs; and

said capstan spring means includes circumferentially facing ends which cooperate with the radially outer portions of said actuator ring lugs.

22. The snubber mechanism of Claim 21, wherein said load tube is interconnected to said outer tubes by axially extending keys which slide in axially extending slots, said actuator rings including outwardly extending teeth which extend between said keys and thereby limit the rotation of said load nut to oscillatory movement between the limits defined by the interference of said actuator ring teeth and the keys.

23. The snubber mechanism of Claim 20, wherein said capstan spring means includes a plurality of coils, the diameter of which enlarge when the control mechanism provides a lagging force increasing the diameter of said actuator coils to engage the interior surface of the surrounding load tube to provide said braking action.

24. A method of snubbing the motion of a pair of members mounted for movement relative to each other and adapted to be connected to objects whose motion is to be controlled;

sensing the acceleration of said movement and initiating braking action on said members at a predetermined acceleration threshold; and

controlling the velocity of said member by way of braking action once said threshold has been reached.

25. The method of Claim 24, wherein said velocity is controlled by oscillating a pivotally mounted inertia mass after a predetermined acceleration threshold has been reached.

26. The method of Claim 25, including the step of engaging a clutch at said acceleration threshold to drive said inertia mass.

27. A method of snubbing motion comprising:

threadably connecting a pair of strut members to a load nut in a manner such that reciprocation of said

0245106

strut members towards each other rotates said load nut in one direction and reciprocating said strut members away from each rotates a load nut in an opposite direction;

positioning a control mechanism within said load nut and threadably connecting the control mechanism to said strut members so that reciprocating movement of said strut members causes said control mechanism to rotate in synchronism with said load nut;

positioning brake means around said load nut;

producing a load in said control mechanism at a predetermined motion threshold; and

transmitting said load to said brake means to apply snubbing action to said strut members so as to cause the strut members to once more move in synchronism with the control mechanism.

28. The method of Claim 27, including the step of:

positioning a capstan carrier tube around said load nut, said brake means includes capstan spring means around said capstan carrier tube; and

transmitting the rotation of said load nut to said capstan spring means and transmitting the load produced by said control mechanism to said capstan spring means in a manner to cause coils of said capstan spring means to expand and engage surrounding brake surface to provide its snubbing action.

Fig. 1

0245106

*Fig. 2*

*Fig. 3*

*Fig. 4*

0245106

Fig. 5

Fig. 6

Fig. 7

Fig. 14

VELOCITY

TIME

Fig. 8

Fig. 9

Fig. 10

Fig. 11

0245106

0245106

Fig. 12

Fig. 13